# EUROPEAN PATENT APPLICATION

(11) **EP 2 832 834 A1**
(43) Date of publication of application: **04.02.2015**
(21) Application number: 13768396.7
(22) Date of filing: 28.03.2013
(51) Int. Cl.: C10M 169/04, C09K 5/04, C10M 105/18, C10M 105/38, C10M 107/24, C10M 107/34, C10N 30/00, C10N 30/06, C10N 30/08, C10N 30/10, C10N 40/30

(54) **WORKING FLUID COMPOSITION FOR REFRIGERATOR**

(30) Priority: 29.03.2012 JP 2012076301
(71) Applicant: JX Nippon Oil & Energy Corporation, Chiyoda-ku Tokyo 100-8162 (JP)
(72) Inventor: SAITO Masanori, Tokyo 100-8162 (JP); ETO Hiroshi, Tokyo 100-8162 (JP); TAKAHASHI Tsutomu, Tokyo 100-8162 (JP); ADEGAWA Kuniko, Tokyo 100-8162 (JP)
(74) Representative: Grünecker, Kinkeldey, Stockmair & Schwanhäusser
(86) International application number: PCT/JP2013/059309
(87) International publication number: WO 2013/147045

(57) **Abstract**

The working fluid composition for a refrigerating machine of the present invention comprises a refrigerant comprising monofluoroethane, and a refrigerating machine oil comprising at least one selected from a polyol ester, a polyvinyl ether and a polyalkylene glycol compound as a base oil, wherein a carbon/oxygen molar ratio of the base oil is 2.5 or more and 5.8 or less.

## Description

### Technical Field

The present invention relates to a working fluid composition for a refrigerating machine, and more specifically relates to a working fluid composition for a refrigerating machine that contains a refrigerant which contains monofluoroethane (also referred to as "HFC-161" or "R161").

### Background Art

CFC (chlorofluorocarbon) and HCFC (hydrochlorofluorocarbon), which have been conventionally used as refrigerants for refrigeration equipment, have been subject to regulation due to the problem of recent ozone depletion, and HFC (hydrofluorocarbon) has come to be used as a refrigerant instead of them.

Among HFC refrigerants, HFC-134a, R407C, and R410A are normally used as refrigerants for car air-conditioners, cold storage chambers, or room air-conditioner. Although the ozone depletion potential (ODP) of these HFC refrigerant is zero, these come to be subject to regulation, because the global warming potential (GWP) thereof is high. While difluoromethane has been studied as one of alternate candidates of these refrigerants, difluoromethane has the following problems: the global warming potential thereof is not sufficiently low; the boiling point thereof is so low that thermodynamic characteristics cannot be applied to a current refrigeration system directly; and difluoromethane is not easily compatible with lubricating oils (refrigerating machine oils) used for conventional HFC refrigerants, such as polyol esters and polyvinyl ethers. On the other hand, unsaturated hydrofluorocarbons have been proposed to be used as a refrigerant due to the following reasons; both of its ODP and GWP are very low; unsaturated hydrofluorocarbons are non-flammable depending on structures; and in particular with respect to HFO-1234yf, thermodynamic characteristics as measures of refrigerant performances are comparable with or better than those of HFC-134a (Patent Literatures 1 to 3).

In addition, a working medium including 80% by mass or more of one or more first components selected from 1,1-difluoroethane (HFC-152a), 1,1,1-trifluoro-2-monofluoroethane (HFC-134a) and 1,1,1-trifluoro-2,2-difluoroethane (HFC-125) as first components, and 20% by mass or less of carbon dioxide (R744) as a second component has been proposed (Patent Literature 4).

Hydrocarbons such as isobutane (R600a) and propane (R290) that are flammable, in which the ODP is 0 and the GWP is as extremely low as about 3, have also been studied (Patent Literatures 5 to 7).

### Citation List

### Patent Literature

[Patent Literature 1] International Publication WO2004/037913
[Patent Literature 2] International Publication WO2005/105947
[Patent Literature 3] International Publication WO2009/057475
[Patent Literature 4] Japanese Patent Application Laid-Open No. 10-265771
[Patent Literature 5] Japanese Patent Application Laid-Open No. 2000-044937
[Patent Literature 6] Japanese Patent Application Laid-Open No. 2000-274360
[Patent Literature 7] Japanese Patent Application Laid-Open No. 2010-031728

### Summary of Invention

### Technical Problem

An object in a refrigeration/air-conditioning system is to find out a working fluid satisfying all of the following many characteristics: with respect to a refrigerant, adverse influences on the environment are small due to a low global warming potential (GWP), use with safety is possible because burning and explosion hardly occur, thermodynamics characteristics are suitable for applications, and large-scale supply is possible because the chemical structure is simple; and with respect to characteristics in the system where a refrigerant and a refrigerating machine oil coexist, they are soluble in each other (compatibility) and are excellent in stability, and an oil film that is not worn is maintained (lubricity).

As the next-generation low-GWP refrigerant instead of the current high-GWP HFC refrigerant, HFC-32 (GWP: 675), HFO-1234yf (GWP: 4), HFC-152a (GWP: 120), and propane (R290, GWP: 3) are studied as major candidates, as described above, but each of them is problematic.

In the refrigerant circulation cycle of refrigeration/air-conditioning equipment, since a refrigerating machine oil for lubricating a refrigerant compressor circulates together with a refrigerant in the cycle, the refrigerating machine oil is demanded to be compatible with the refrigerant. In the refrigeration/air-conditioning system using HFC-32, however, a problem is that HFC-32 is hardly compatible with the refrigerating machine oil. In the refrigeration/air-conditioning equipment, sufficient compatibility between the refrigerant and the refrigerating machine oil is not achieved depending on the selection of the refrigerating machine oil used with the refrigerant, and the refrigerating machine oil discharged from the refrigerant compressor easily remains at a place where the temperature is low in the cycle. As a result, there occur the problems of wear due to lubrication failure by the reduction in amount of the oil in the refrigerant compressor and of blockage of an expansion mechanism such as a capillary that is a narrow tube whose inner diameter is 1 mm or less. In addition, there is also the following problems about thermodynamics characteristics: because the boiling point of HFC-32 is -52°C and is lower than that of the current refrigerant, HCFC-22, used for room air-conditioners, all-in-one air conditioners, and the like by about 10°C, the pressure is higher at the same temperature and thus the discharge temperature is excessively increased; and furthermore, the GWP thereof is 675 and thus is not sufficiently low.

In the refrigeration/air-conditioning system using HFO-1234yf being an unsaturated hydrofluorocarbon, whose GWP is also extremely low, it has been considered that HFO-1234yf is compatible with the refrigerating machine oil such as polyol esters and an ether compound used for the current HFC, and thus is applicable. According to the studies by the present inventors, however, the following problem about stability has been revealed: unsaturated hydrofluorocarbons have unstable double bonds in their molecules and thus are poor in thermal/chemical stability. In addition, HFO-1234yf, whose boiling point is -25°C, can be applied in the fields of a car air-conditioner and a coolerator in which HFC-134a whose boiling point is -26°C is used, but cannot be applied in the fields of a room air-conditioner, an all-in-one air conditioner, an industrial refrigerating machine, and the like in which HCFC-22 whose boiling point is -41°C and whose pressure is relatively high is used and the amount of the refrigerant used is large, because efficiency is too low.

HFC-152a, whose GWP is also low, is a well-balanced refrigerant in terms of characteristics, but is flammable. HFC-152a, whose boiling point is -25°C, however, can be applied only in the field of HFC-134a due to thermodynamics characteristics thereof. In the coolerator field, in which the amount of the refrigerant charged is small, among main fields in which HFC-134a is used, switching to isobutane (R600a) whose GWP is as low as 3 has already progressed. Isobutane, however, also has the problem of incapable of being applied to applications in which the amount of the refrigerant charged is small, in terms of thermodynamics characteristics and safety.

Propane, whose boiling point is -42°C and whose GWP is also extremely low, is excellent in refrigerant characteristics in the field in which HCFC-22, or as an alternate thereof, R410A that is a mixed refrigerant where the ODP is 0 and HFC-32 and HFC-125 are each present in 50% by mass is used. Propane, however, is highly flammable and also high in explosibility, and has the problem of safety.

In the case of the refrigerant as described in Patent Literature 4, including 80% by mass or more of 1,1-difluoroethane and the like as first component(s) and 20% by mass or less of carbon dioxide as a second component, the ODP is 0, but the GWP is not sufficiently low.

The present invention has been made under such circumstances, and an object thereof is to provide a working fluid composition for a refrigerating machine that has little adverse influences on the environment and that can achieve compatibility, thermal/chemical stability and lubricity in a highly effective system at high levels.

### Solution to Problem

The present inventors have made intensive studies in order to achieve the above object, and as a result, have found that the above problems can be solved by using a refrigerant comprising monofluoroethane (HFC-161), and a refrigerating machine oil with a specific ester or ether as a base oil, leading to the completion of the present invention.

That is, the present invention provides a working fluid composition for a refrigerating machine, comprising: a refrigerant comprising monofluoroethane (HFC-161); and
a refrigerating machine oil comprising at least one selected from a polyol ester, a polyvinyl ether and a polyalkylene glycol compound as a base oil, wherein a carbon/oxygen molar ratio of the base oil is 2.5 or more and 5.8 or less.

The refrigerant may also further comprise at least one selected from a compound represented by the following formula (A) and carbon dioxide.

CₚH_{q}Fᵣ (A)

[p represents an integer of 1 to 4, q represents an integer of 1 to 10, and r represents an integer of 0 to 5.]

Furthermore, in the case where the refrigerant comprises the compound represented by the formula (A), at least one selected from difluoromethane, 1,1-difluoroethane, 1,1,1-trifluoroethane, 1,1,1,2-tetrafluoroethane, pentafluoroethane, 1,3,3,3-tetrafluoropropene, 2,3,3,3-tetrafluoropropene, propane (R290) and isobutane (R600a) is preferable as the compound.

In addition, it is preferable that a mass ratio of the refrigerant to the refrigerating machine oil be 90 : 10 to 30 : 70.

In addition, it is preferable that a global warming potential of the refrigerant be 300 or less.

In the case where the base oil comprises a polyol ester whose carbon/oxygen molar ratio is 2.5 or more and 5.8 or less, preferable examples of the polyol ester include polyol esters obtainable by synthesis from fatty acids having 4 to 9 carbon atoms and polyhydric alcohols having 4 to 12 carbon atoms.

In the case where the base oil comprises a polyalkylene glycol having a carbon/oxygen molar ratio of 2.5 or more and 5.8 or less, preferable examples of the polyalkylene glycol compound include a compound having a homopolymerization chain of propylene oxide or a copolymerization chain of propylene oxide and ethylene oxide, at least one of both ends of the chain being blocked by an ether bond.

In the case where the base oil comprises a polyvinyl ether having a carbon/oxygen molar ratio of 2.5 or more and 5.8 or less, preferable examples of the polyvinyl ether include a polyvinyl ether having a structural unit represented by the following formula (1). 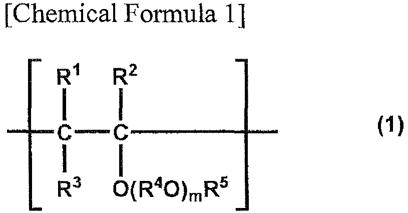 [R¹, R² and R³ may be the same or different and each represent a hydrogen atom or a hydrocarbon group having 1 to 8 carbon atoms, R⁴ represents a divalent hydrocarbon group having 1 to 10 carbon atoms or an ether bond oxygen-containing divalent hydrocarbon group having 2 to 20 carbon atoms, R⁵ represents a hydrocarbon group having 1 to 20 carbon atoms, m represents a number such that an average value of m in the polyvinyl ether is 0 to 10, R¹ to R⁵ may be the same or different in each occurrence of the structural units, and when m represents 2 or more in one structural unit, a plurality of R⁴O may be the same or different.]

### Advantageous Effects of Invention

According to the present invention, a working fluid composition for a refrigerating machine that has little adverse influences on the environment and that can achieve compatibility, thermal/chemical stability and lubricity in a highly effective system at high levels is provided.

### Description of Embodiments

Hereinafter, a suitable embodiment of the present invention is described in detail.

A working fluid composition for a refrigerating machine according to the present embodiment comprises
a refrigerant comprising monofluoroethane, and
a refrigerating machine oil comprising at least one selected from a polyol ester, a polyvinyl ether and a polyalkylene glycol compound as a base oil, wherein a carbon/oxygen molar ratio of the base oil is 2.5 or more and 5.8 or less.

In the working fluid composition for a refrigerating machine according to the present embodiment, the proportions of the refrigerant and the refrigerating machine oil blended are not particularly limited, but the mass ratio of the refrigerant to the refrigerating machine oil is preferably 90 : 10 to 30 : 70 and more preferably 80 : 20 to 40 : 60.

Then, the components contained in the working fluid composition for a refrigerating machine are described in detail.

### [Refrigerant]

The refrigerant in the present embodiment contains monofluoroethane (HFC-161). Monofluoroethanes have one fluorine atom in their molecules and exhibit characteristic properties.

That is, first, in the field in which HCFC-22 has been used as the refrigerant, propane (R290) is most suitable as a low-GWP refrigerant because of thermodynamics characteristics. Propane, however, is highly flammable, and thus has the large problem of safety and the following problem: in the case of existing with the refrigerating machine oil, it is so dissolved in the refrigerating machine oil that the viscosity of the oil is significantly reduced, causing lubricity to be deteriorated.

On the contrary, monofluoroethanes has a low GWP, specifically 100 or less, and a boiling point of -37°C which is close to the boiling point of HCFC-22, -41°C. Thus, its thermodynamics characteristics are similar to those of HCFC-22, and it is good in thermodynamics characteristics as the refrigerant, compatibility with the refrigerating machine oil, and stability, even by itself. Although being flammable, HFC-161 has an explosion lower limit of 5.0% by volume while the explosion lower limit of propane is 2.1% by volume, and HFC-161 has a boiling point higher than that of propane by 5°C, and a lower pressure than propane, which hardly causes refrigerant leakage and results in much higher safety. The refrigerant concentration in a room rarely reaches 5.0% by volume. In addition, since monofluoroethanes have fluorine in their molecules, the amount thereof dissolved in the refrigerating machine oil is much smaller than that of propane, and therefore the amount of the refrigerant charged per refrigeration/air-conditioning apparatus is small. Thus, it is considered that practical realization is possible by taking corresponding safety measures. Since the amount dissolved in the coexisting refrigerating machine oil is small, the reduction in viscosity of the refrigerating machine oil is also small, resulting in an advantage in lubricity; and since no double bond is present in the molecules, stability is not problematic.

In addition, the refrigerant in the present embodiment may also further contain at least one selected from a compound represented by the following formula (A) and carbon dioxide, in addition to the monofluoroethane.

CₚH_{q}Fᵣ (A)

[p represents an integer of 1 to 4, q represents an integer of 1 to 10, and r represents an integer of 0 to 5.]

Because of containing at least one selected from the compound represented by the above formula (A) and carbon dioxide, the refrigerant in the present embodiment can allow the flammability resulting from the monofluoroethane to be decreased. In addition, by adjustment of the composition of the refrigerant, it is possible to easily and certainly perform adjustment of thermodynamics characteristics of the refrigerant depending on the intended use, which is effective in terms of the increase in efficiency of a system.

Preferable components combined with the monofluoroethane include, with listed together with the boiling point, GWP and flammability noted in parentheses, HFC-32 (-52°C, 675, low flammable), HFC-152a (-25°C, 120, flammable), HFC-143a (-47°C, 4300, low flammable), HFC-134a (-26°C, 1300, non-flammable), HFC-125 (-49°C, 3400, non-flammable), HFO-1234ze (-19°C, 6, low flammable), HFO-1234yf (-29°C, 4, low flammable), propane (-42°C, 3, highly flammable), isobutane (-12°C, 3, highly flammable), and carbon dioxide (-78°C, 1, non-flammable). These components may be used in combination of two or more.

For example, in order to enhance the safety of the refrigerant (mixed refrigerant) in the present embodiment, a non-flammable refrigerant may be blended, but a non-flammable HFC refrigerant is generally high in GWP. Then, there is a method of blending a low flammable refrigerant for the balance of characteristics. In particular, since carbon dioxide is non-flammable and is the standard compound of GWP, whose GWP is as low as 1, blending thereof is effective as long as it has no influence on thermodynamics characteristics.

In addition, while a high-pressure refrigerant, namely, a low boiling point refrigerant is blended in order to enhance efficiency, propane is highly flammable, and thus HFC-32, HFC-143a, and HFC-125 are candidates.

For making the GWP low, HFO-1234ze, HFO-1234yf and carbon dioxide, and further propane and isobutane are preferable.

In addition, in the case where the pressure of the mixed refrigerant is decreased for applications to fields other than the field where HCFC-22 has been used, the refrigerant is selected from relatively low-pressure refrigerants such as HFC-134a, HFO-1234ze and HFO-1234yf whose boiling points are higher than -30°C, in consideration of the overall balance of characteristics.

In the case where the refrigerant in the present embodiment is a mixed refrigerant of the monofluoroethane and the above component, the proportion of the monofluoroethane contained in the mixed refrigerant is preferably 50% by mass or more and more preferably 60% by mass or more. In addition, the GWP is preferably set to 300 or less, more preferably 200 or less, and further preferably 150 or less from the viewpoint of the global environment protection. Although the mixed refrigerant for use in the present embodiment is preferably an azeotropic mixture, it is not particularly required to be an azeotropic mixture as long as it has physical properties necessary as the refrigerant.

### [Refrigerating machine oil]

The refrigerating machine oil according to the present embodiment contains at least one selected from a polyol ester, a polyvinyl ether and a polyalkylene glycol compound as a base oil, and the carbon/oxygen molar ratio of the base oil is 2.5 or more and 5.8 or less. Carbon and oxygen in the base oil can be quantitatively analyzed by a common elemental analysis method. While a carbon analysis includes a thermal conductivity method after conversion into carbon dioxide by burning, and a gas chromatography method, an oxygen analysis is commonly a carbon reduction method in which carbon monoxide derived by carbon is quantitatively analyzed, and a Shutze-Unterzaucher method is widely put into practical use.

In the case where the base oil is a mixed base oil including two or more components, the carbon/oxygen molar ratio of each of the components included in the mixed base oil is not particularly limited as long as the carbon/oxygen molar ratio of the mixed base oil is 2.5 or more and 5.8 or less, but it is preferable that the carbon/oxygen molar ratio of each of the polyol ester, the polyvinyl ether and the polyalkylene glycol compound be 2.5 or more and 5.8 or less. These preferable examples are described later.

### [Polyol ester]

The polyol ester is an ester obtainable by synthesis from a polyhydric alcohol and a carboxylic acid, and the carbon/oxygen molar ratio is preferably 2.5 or more and 5.8 or less, more preferably 3.2 or more and 5.0 or less, and further preferably 4.0 or more and 5.0 or less. As the carboxylic acid, fatty acids (aliphatic monocarboxylic acids), in particular saturated fatty acids are preferably used, and the number of carbon atoms thereof is preferably 4 or more and 9 or less and particularly preferably 5 or more and 9 or less. The polyol ester may be a partial ester in which some of hydroxyl groups in the polyhydric alcohol remains as hydroxyl groups without being esterified, may be a complete ester in which all of hydroxyl groups are esterified, or may be a mixture of the partial ester and the complete ester; but the hydroxyl value is preferably 10 mgKOH/g or less, further preferably 5 mgKOH/g or less, and most preferably 3 mgKOH/g or less.

### [Fatty acid]

(a) In the case where the proportion of difluoromethane that is poor in compatibility with the refrigerating machine oil is high among main components of the refrigerant, i.e., hydrofluoroethane represented by the above formula (A), difluoromethane and 2,3,3,3-tetrafluoropropene, for example, in the case where the proportion of difluoromethane in the refrigerant is 40% by mass or more, the proportion of branched fatty acids of fatty acids forming the polyol ester is preferably 50 to 100% by mol, particularly preferably 70 to 100% by mol, and further preferably 90 to 100% by mol.

Specific examples of branched fatty acids having 4 to 9 carbon atoms include branched butanoic acids, branched pentanoic acids, branched hexanoic acids, branched heptanoic acids, branched octanoic acids, and branched nonanoic acids. More specifically, fatty acids branched at α-position and/or β-position are preferable, isobutanoic acid, 2-methylbutanoic acid, 2-methylpentanoic acid, 2-methylhexanoic acid, 2-ethylpentanoic acid, 2-methylheptanoic acid, 2-ethylhexanoic acid, 3,5,5-trimethylhexanoic acid, and the like are preferable, and among them, 2-ethylhexanoic acid and/or 3,5,5-trimethylhexanoic acid is most preferable. Herein, fatty acids other than branched fatty acids having 4 to 9 carbon atoms may be included.

(b) In the case where the total of the content of 2,3,3,3-tetrafluoropropene among main components of the refrigerant is higher than the total of the contents of hydrofluoroethane represented by the above formula (A) and difluoromethane, the proportion of straight fatty acids of fatty acids is preferably 50 to 95% by mol, particularly preferably 60 to 90% by mol, and further preferably 70 to 85% by mol in view of high compatibility with the refrigerating machine oil.

Specific examples of straight fatty acids having 4 to 9 carbon atoms include butanoic acid, pentanoic acid, hexanoic acid, heptanoic acid, octanoic acid, and nonanoic acid. Among them, pentanoic acid and/or heptanoic acid is preferable, and in particular a mixed acid thereof is most preferable. The content of straight pentanoic acid is preferably 30% by mol or more in particular in terms of compatibility, and on the other hand, is preferably 50% by mol or less and particularly preferably 45% by mol or less in particular in terms of hydrolytic stability. The content of heptanoic acid is preferably 20% by mol or more, particularly preferably 25% by mol or more, and further preferably 30% by mol or more, in terms of lubricity. On the other hand, the content is 50% by mol or less and preferably 45% by mol or less in particular in terms of hydrolytic stability. As branched fatty acids other than straight fatty acids, branched fatty acids having 5 to 9 carbon atoms, in particular, 2-ethylhexanoic acid and/or 3,5,5-trimethylhexanoic acid is preferable. The content of 3,5,5-trimethylhexanoic acid is preferably 5% by mol or more and particularly preferably 10% by mol or more in particular in terms of hydrolytic stability, and on the other hand, the content is preferably 30% by mol or less and particularly preferably 25% by mol or less in particular in terms of compatibility and lubricity.

As preferable fatty acids in the cases (b), specifically, a mixed acid of straight pentanoic acid, straight heptanoic acid and 3,5,5-trimethylhexanoic acid is preferable, and this mixed acid is more preferably one containing 30 to 50% by mol of straight pentanoic acid, 20 to 50% by mol of straight heptanoic acid and 5 to 30% by mol of 3,5,5-trimethylhexanoic acid.

### [Polyhydric alcohol]

As the polyhydric alcohol forming the polyol ester, polyhydric alcohols having 2 to 6 hydroxyl groups are preferably used. The number of carbon atoms of polyhydric alcohols is preferably 4 to 12 and particularly preferably 5 to 10. Hindered alcohols such as neopentyl glycol, trimethylolethane, trimethylolpropane, trimethylolbutane, di-(trimethylolpropane), tri-(trimethylolpropane), pentaerythritol and di-(pentaerythritol) are preferable. Since being particularly excellent in compatibility with the refrigerant and in hydrolytic stability, pentaerythritol or a mixed ester of pentaerythritol and di-(pentaerythritol) is most preferable.

### [Polyvinyl ether]

The carbon/oxygen molar ratio of the polyvinyl ether is preferably 2.5 or more and 5.8 or less, more preferably 3.2 or more and 5.8 or less, and further preferably 4.0 or more and 5.0 or less. If the carbon/oxygen molar ratio is less than this range, hygroscopicity is higher, and if the ratio is more than this range, compatibility is deteriorated. In addition, the weight average molecular weight of the polyvinyl ether is preferably 200 or more and 3000 or less and more preferably 500 or more and 1500 or less.

The polyvinyl ether preferably used in the present embodiment has a structural unit represented by the following formula (1): 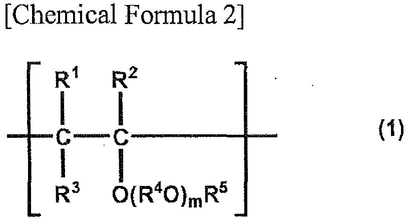 [R¹, R² and R³ may be the same or different and each represent a hydrogen atom or a hydrocarbon group having 1 to 8 carbon atoms, R⁴ represents a divalent hydrocarbon group having 1 to 10 carbon atoms or an ether bond oxygen-containing divalent hydrocarbon group having 2 to 20 carbon atoms, R⁵ represents a hydrocarbon group having 1 to 20 carbon atoms, m represents a number such that an average value of m in the polyvinyl ether is 0 to 10, R¹ to R⁵ may be the same or different in each occurrence of the structural units, and when m represents 2 or more in one structural unit, a plurality of R⁴O may be the same or different.]

At least one of R¹, R² and R³ in the above formula (1) is preferably a hydrogen atom, and all thereof are particularly preferably a hydrogen atom. m in the formula (1) is preferably 0 or more and 10 or less, particularly preferably 0 or more and 5 or less, and further preferably 0. R⁵ in the formula (1) represents a hydrocarbon group having 1 to 20 carbon atoms. This hydrocarbon group includes an alkyl group, a cycloalkyl group, a phenyl group, an aryl group, an arylalkyl group, and an alkyl group, and in particular an alkyl group having 1 to 5 carbon atoms is preferable.

The polyvinyl ether according to the present embodiment may be a homopolymer constituted by one type of the structural unit represented by the formula (1) or a copolymer constituted by 2 or more type of the structural units, but the copolymer brings about the effect of further enhancing lubricity, insulation property, hygroscopicity, and the like while satisfying compatibility. In this case, the types of monomers serving as raw materials, the type of an initiator, and the rate of a copolymer can be selected to thereby adapt the performances of an oil agent to the intended levels. Accordingly, the following effect is exerted: an oil agent can be obtained at will according to requirements such as lubricity and compatibility that vary depending on the type of a compressor in a refrigeration system or an air-conditioning system, the material of a lubrication portion, refrigeration ability, the type of a refrigerant, and the like. The copolymer may be any of a block copolymer and a random copolymer.

In the case where the polyvinyl ether according to the present embodiment is a copolymer, it is preferable that the copolymer include a structural unit (1-1) represented by the above formula (1) wherein R⁵ represents an alkyl group having 1 to 3 carbon atoms, and a structural unit (1-2) represented by the above formula (1) wherein R⁵ represents an alkyl group having 3 to 20 carbon atoms, preferably 3 to 10 carbon atoms, further preferably 3 to 8 carbon atoms. R⁵ in the structural unit (1-1) is particularly preferably an ethyl group, and R⁵ in the structural unit (1-2) is particularly preferably an isobutyl group. Furthermore, in the case where the polyvinyl ether according to the present embodiment is the copolymer including the structural units (1-1) and (1-2), the molar ratio of the structural unit (1-1) to the structural unit (1-2) is preferably 5 : 95 to 95 : 5, more preferably 20 : 80 to 90 : 10, and further preferably 70 : 30 to 90 : 10. In the case where the molar ratio departs from the above range, there is a tendency toward insufficient compatibility with the refrigerant and higher hygroscopicity.

The polyvinyl ether according to the present embodiment may be one constituted by only the structural unit represented by the above formula (1), but may be a copolymer further including a structural unit represented by the following formula (2). In this case, the copolymer may be any of a block copolymer and a random copolymer. 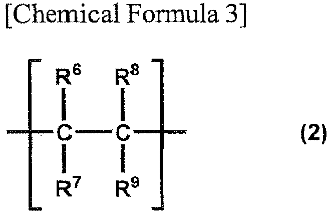 [R⁶ to R⁹ may be the same as or different from one another and each represent a hydrogen atom or a hydrocarbon group having 1 to 20 carbon atoms.]

### [End structure of polyvinyl ether]

The polyvinyl ether according to the present embodiment can be produced by polymerization of each corresponding vinyl ether-based monomer, and copolymerization of a corresponding hydrocarbon monomer having an olefinic double bond with a corresponding vinyl ether-based monomer. As the vinyl ether-based monomer corresponding to the structural unit represented by the formula (1), a monomer represented by the following formula (3) is suitable. 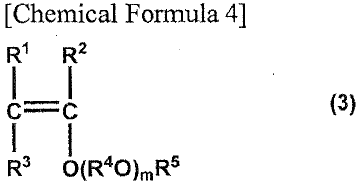 [R¹, R², R³, R⁴, R⁵ and m represent the same meaning as in R¹, R², R³, R⁴, R⁵ and m in the formula (1), respectively.

As the polyvinyl ether according to the present embodiment, ethers having the following end structures are suitable.
(A) Those having a structure in which one end is represented by formula (4) or (5) and other end is represented by formula (6) or (7).] 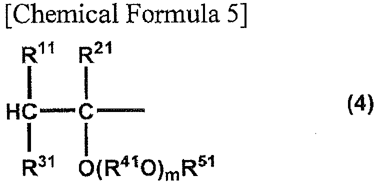 [R¹¹, R²¹ and R³¹ may be the same as or different from one another and each represent a hydrogen atom or a hydrocarbon group having 1 to 8 carbon atoms, R⁴¹ represents a divalent hydrocarbon group having 1 to 10 carbon atoms or an ether bond oxygen-containing divalent hydrocarbon group having 2 to 20 carbon atoms, R⁵¹ represents a hydrocarbon group having 1 to 20 carbon atoms, m represents a number such that an average value of m in the polyvinyl ether is 0 to 10, and when m represents 2 or more, a plurality of R⁴¹O may be the same or different.] 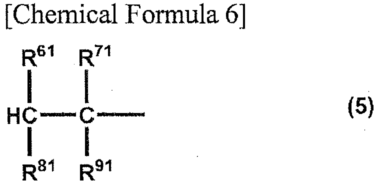 [R⁶¹, R⁷¹, R⁸¹ and R⁹¹ may be the same as or different from one another and each represent a hydrogen atom or a hydrocarbon group having 1 to 20 carbon atoms.] 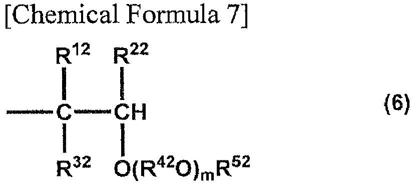 [R¹², R²² and R³² may be the same as or different from one another and each represent a hydrogen atom or a hydrocarbon group having 1 to 8 carbon atoms, R⁴² represents a divalent hydrocarbon group having 1 to 10 carbon atoms or an ether bond oxygen-containing divalent hydrocarbon group having 2 to 20 carbon atoms, R⁵² represents a hydrocarbon group having 1 to 20 carbon atoms, m represents a number such that an average value of m in the polyvinyl ether is 0 to 10, and when m represents 2 or more, a plurality of R⁴²O may be the same or different.] 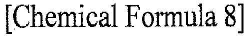 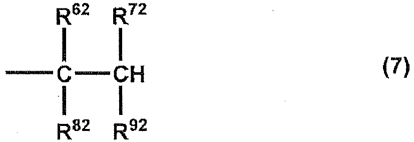 [R⁶², R⁷², R⁸² and R⁹² may be the same as or different from one another and each represent a hydrogen atom or a hydrocarbon group having 1 to 20 carbon atoms.]
(B) Those having a structure in which one end is represented by the above formula (4) or (5) and other end is represented by the following formula (8). 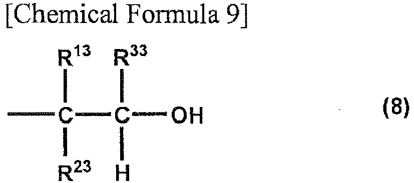 [R¹³, R²³ and R³³ may be the same as or different from one another and each represent a hydrogen atom or a hydrocarbon group having 1 to 8 carbon atoms.]

Among such polyvinyl ether-based compounds, in particular the following is suitable as a main component of the refrigerating machine oil according to the present embodiment.
(1) Those having a structure in which one end is represented by the formula (5) or (6) and other end is represented by the formula (7) or (8), wherein in the formula (1), R¹, R² and R³ are each a hydrogen atom, m represents a number of 0 to 4, R⁴ represents a divalent hydrocarbon group having 2 to 4 carbon atoms, and R⁵ represents a hydrocarbon group having 1 to 20 carbon atoms.
(2) Those having only the structural unit represented by the formula (1), having a structure in which one end is represented by the formula (5) and other end is represented by the formula (7), wherein in the formula (1), R¹, R² and R³ are each a hydrogen atom, m represents a number of 0 to 4, R⁴ represents a divalent hydrocarbon group having 2 to 4 carbon atoms, and R⁵ represents a hydrocarbon group having 1 to 20 carbon atoms.
(3) Those having a structure in which one end is represented by the formula (5) or (6) and other end is represented by the formula (7) or (8), wherein in the formula (1), R¹, R² and R³ are each a hydrogen atom, m represents a number of 0 to 4, R⁴ represents a divalent hydrocarbon group having 2 to 4 carbon atoms, and R⁵ represents a hydrocarbon group having 1 to 20 carbon atoms.
(4) Those that are each of the (1) to (3), having a structural unit in which R⁵ in the formula (1) represents a hydrocarbon group having 1 to 3 carbon atoms, and a structural unit in which such R⁵ represents a hydrocarbon group having 3 to 20 carbon atoms.

### [Production of polyvinyl ether]

The polyvinyl ether according to the present embodiment can be produced by subjecting the above monomer to radical polymerization, cation polymerization, radiation polymerization, or the like. After completion of the polymerization reaction, a usual separation/purification method is if necessary conducted, and thus the intended polyvinyl ether-based compound having the structural unit represented by the formula (1) is obtained.

As described above, it is required for the polyvinyl ether according to the present embodiment that the carbon/oxygen molar ratio is in the predetermined range, and the carbon/oxygen molar ratio of a raw material monomer can be regulated to thereby produce a polymer whose molar ratio is in the above range. That is, when the rate of a monomer whose carbon/oxygen molar ratio is high is high, a polymer whose carbon/oxygen molar ratio is high is obtained, and when the rate of a monomer whose carbon/oxygen molar ratio is low is high, a polymer whose carbon/oxygen molar ratio is low is obtained. Herein, in the case where a vinyl ether-based monomer and a hydrocarbon monomer having an olefinic double bond are copolymerized, a polymer whose carbon/oxygen molar ratio is higher than the carbon/oxygen molar ratio of the vinyl ether-based monomer is obtained, but the proportion thereof can be regulated by the rate and the number of carbon atoms of the hydrocarbon monomer having an olefinic double bond to be used.

In addition, in a production step of the polyvinyl ether represented by the above formula (1), a side reaction may be caused and thus an unsaturated group such as an aryl group may be formed in the molecule. If the unsaturated group is formed in the polyvinyl ether molecule, the following phenomenon easily occurs: the thermal stability of the polyvinyl ether itself is deteriorated, a polymerized produce is generated to generate sludge, or antioxidative property (oxidation preventing property) is deteriorated to generate peroxide. In particular, if peroxide is generated, it is decomposed to generate a compound having a carbonyl group, and the compound having a carbonyl group further generates sludge to easily cause blockage of a capillary. Therefore, as the polyvinyl ether according to the present embodiment, those in which the degree of unsaturation due to an unsaturated group and the like is low is preferable, and specifically, the degree of unsaturation is preferably 0.04 meq/g or less, more preferably 0.03 meq/g or less, and most preferably 0.02 meq/g or less. In addition, the peroxide value is preferably 10.0 meq/kg or less, more preferably 5.0 meq/kg or less, and most preferably 1.0 meq/kg. Furthermore, the carbonyl value is preferably 100 ppm by weight or less, more preferably 50 ppm by weight or less, and most preferably 20 ppm by weight or less.

Herein, the degree of unsaturation, the peroxide value and the carbonyl value in the present invention are each the value measured by the Standard Methods for the Analysis of Fats, Oils and Related Materials, established by the Japan Oil Chemists' Society. That is, the degree of unsaturation in the present invention is the value (meq/g) obtained by reacting a Wijs solution (ICl-acetic acid solution) with a sample, leaving the resultant to stand in a dark area, thereafter reducing the excess ICl to iodine, titrating the iodine content with sodium thiosulfate to calculate the iodine value, and converting the iodine value to the vinyl equivalent; the peroxide value in the present invention is the value (meq/kg) obtained by adding potassium iodide to a sample, titrating the free iodine generated with sodium thiosulfate, and converting the free iodine to the number of milliequivalents with respect to 1 kg of the sample; and the carbonyl value in the present invention is the value (ppm by weight) obtained by allowing 2,4-dinitrophenylhydrazine to act on a sample to yield a colorable quinoid ion, measuring the absorbance of the sample at 480 nm, and converting the absorbance to the carbonyl content based on a predetermined calibration curve with cinnamaldehyde as the standard substance. The hydroxyl value is not particularly limited, but it is desirable that the hydroxyl value be 10 mgKOH/g, preferably 5 mgKOH/g and further preferably 3 mgKOH/g.

### [Polyalkylene glycol compound]

The carbon/oxygen molar ratio of the polyalkylene glycol (PAG) compound according to the present embodiment is preferably 2.5 or more and 5.8 or less, preferably 2.5 or more and 4.0 or less, and further preferably 2.7 or more and 3.5 or less. If the molar ratio is less than this range, hygroscopicity is high and electrical insulation property is deteriorated, and if the molar ratio is more than this range, compatibility is deteriorated. The weight average molecular weight of the polyalkylene glycol compound is preferably 200 or more and 3000 or less, and more preferably 500 or more and 1500 or less.

### [Structural unit of polyalkylene glycol]

Polyalkylene glycols include those of various chemical structures, but a basic compound thereof is polyethylene glycol, polypropylene glycol, polybutylene glycol, or the like. The unit structure thereof is oxyethylene, oxypropylene, or oxybutylene, and polyalkylene glycols can be obtained by subjecting each monomer, ethylene oxide, propylene oxide, or butylene oxide, as a raw material, to ring-opening polymerization.

Examples of the polyalkylene glycol include a compound represented by the following formula (9):

R¹⁰¹-[(OR¹⁰²)_{f}-OR¹⁰³]_{g} (9)

[R¹⁰¹ represents a hydrogen atom, an alkyl group having 1 to 10 carbon atoms, an acyl group having 2 to 10 carbon atoms or a residue of a compound having 2 to 8 hydroxyl groups, R¹⁰² represents an alkylene group having 2 to 4 carbon atoms, R¹⁰³ represents a hydrogen atom, an alkyl group having 1 to 10 carbon atoms or an acyl group having 2 to 10 carbon atoms, f represents an integer of 1 to 80, and g represents an integer of 1 to 8.]

In the above formula (9), the alkyl group represented by each of R¹⁰¹ and R¹⁰³ may be any of straight, branched and cyclic alkyl groups. The number of carbon atoms of the alkyl group is preferably 1 to 10 and more preferably 1 to 6. If the number of carbon atoms of the alkyl group is more than 10, compatibility with a working medium tends to be deteriorated.

In addition, the alkyl group portion of the acyl group represented by each of R¹⁰¹ and R¹⁰³ may be any of straight, branched and cyclic alkyl group portions. The number of carbon atoms of the acyl group is preferably 2 to 10 and more preferably 2 to 6. If the number of carbon atoms of the acyl group is more than 10, compatibility with a working medium may be deteriorated to cause phase separation.

In the case where both of the groups represented by R¹⁰¹ and R¹⁰³ are alkyl groups or acyl groups, the groups represented by R¹⁰¹ and R¹⁰³ may be the same or different. Furthermore, when g represents 2 or more, a plurality of R¹⁰¹ and R¹⁰³ in the same molecule may be the same or different.

In the case where the group represented by R¹⁰¹ is a residue of a compound having 2 to 8 hydroxyl groups, this compound may be a chain group or may be a cyclic group.

In the polyalkylene glycol represented by the above formula (9), at least one of R¹⁰¹ and R¹⁰³ is preferably an alkyl group (more preferably an alkyl group having 1 to 4 carbon atoms) and particularly preferably a methyl group in terms of compatibility with a working medium.

Furthermore, both of R¹⁰¹ and R¹⁰³ are preferably an alkyl group (more preferably alkyl groups having 1 to 4 carbon atoms) and particularly preferably a methyl group in terms of thermal/chemical stability.

Preferably, any one of R¹⁰¹ and R¹⁰³ is an alkyl group (more preferably an alkyl group having 1 to 4 carbon atoms) and other thereof is a hydrogen atom, and particularly preferably, one is a methyl group and other is a hydrogen atom, in terms of easiness of production and cost. In addition, both of R¹⁰¹ and R¹⁰³ are preferably a hydrogen atom in terms of lubricity and solubility of sludge.

R¹⁰² in the above formula (9) represents an alkylene group having 2 to 4 carbon atoms, and specific examples of such an alkylene group include an ethylene group, a propylene group, and a butylene group. In addition, an oxyalkylene group as a repeating unit represented by OR¹⁰² includes an oxyethylene group, an oxypropylene group, and an oxybutylene group. Oxyalkylene groups in the same molecule may be the same, and 2 or more oxyalkylene groups may be included.

With respect to the polyalkylene glycol represented by the above formula (9), a copolymer including an oxyethylene group (EO) and an oxypropylene group (PO) is preferable from the viewpoints of compatibility with a working medium and viscosity-temperature characteristics, and in this case, the proportion (EO/(PO+EO)) of the oxyethylene group in the sum of the oxyethylene group and the oxypropylene group is preferably in a range from 0.1 to 0.8 and more preferably in a range from 0.3 to 0.6 in terms of baking load and viscosity-temperature characteristics.

In addition, the value of EO/(PO+EO) is preferably in a range from 0 to 0.5, more preferably in a range from 0 to 0.2, and most preferably 0 (namely, propylene oxide homopolymer), in terms of hygroscopicity and thermal and oxidation stability.

In the above formula (9), f represents the number of repetitions of the oxyalkylene group OR¹⁰² (degree of polymerization), and represents an integer of 1 to 80. In addition, g represents an integer of 1 to 8. For example, in the case where R¹⁰¹ represents an alkyl group or an acyl group, g represents 1. In the case where R¹⁰¹ represents a residue of a compound having 2 to 8 hydroxyl groups, g represents the number of hydroxyl groups in the compound.

In addition, the product (f × g) of f and g is not particularly limited, but it is preferable that the average value of f × g be 6 to 80 in order to satisfy the above-described requirements and performances as the lubricating oil for a refrigerating machine in a well-balanced manner.

The number average molecular weight of the polyalkylene glycol represented by the formula (9) is preferably 500 to 3000, further preferably 600 to 2000 and more preferably 600 to 1500, and it is preferable that f represent a number so that the number average molecular weight of the polyalkylene glycol satisfies the above conditions. In the case where the number average molecular weight of the polyalkylene glycol is too low, lubricity under coexistence with the refrigerant is insufficient. On the other hand, in the case where the number average molecular weight is too high, a composition range in which compatibility with the refrigerant is exhibited under low temperature conditions is narrow, and lubrication failure in a refrigerant compressor and inhibition of heat exchange in an evaporator easily occur.

The hydroxyl value of the polyalkylene glycol is not particularly limited, but it is desirable that the hydroxyl value be 100 mgKOH/g or less, preferably 50 mgKOH/g or less, further preferably 30 mgKOH/g or less, and most preferably 10 mgKOH/g or less.

The polyalkylene glycol according to the present embodiment can be synthesized using a conventionally known method ("Alkylene Oxide Polymers", Shibata, M. et al., Kaibundo, issued on November 20, 1990). For example, the polyalkylene glycol represented by the above formula (9) is obtained by performing addition polymerization of one or more predetermined alkylene oxides to an alcohol (R¹⁰¹OH; R¹⁰¹ represents the same meaning as in R¹⁰¹ in the above formula (9)), and subjecting the hydroxyl group at the end to etherification or esterification. Herein, in the case where two or more different alkylene oxides are used in the production step, the resulting polyalkylene glycol may be any of a random copolymer and a block copolymer, but it is preferably a block copolymer because of tending to be more excellent in oxidation stability and lubricity, and preferably a random copolymer because of tending to be more excellent in low-temperature fluidity.

The kinematic viscosity at 100°C of the polyalkylene glycol according to the present embodiment is preferably 5 to 20 mm²/s, preferably 6 to 18 mm²/s, more preferably 7 to 16 mm²/s, further preferably 8 to 15 mm²/s, and most preferably 10 to 15 mm²/s. If the kinematic viscosity at 100°C is less than the above lower limit, lubricity under coexistence with the refrigerant is insufficient, and on the other hand, if the kinematic viscosity at 100°C is more than the above upper limit, a composition range in which compatibility with the refrigerant is exhibited is narrow, and lubrication failure in a refrigerant compressor and inhibition of heat exchange in an evaporator easily occur. In addition, the kinematic viscosity at 40°C of the polyalkylene glycol is preferably 10 to 200 mm²/s and more preferably 20 to 150 mm²/s. If the kinematic viscosity at 40°C is less than 10 mm²/s, lubricity and sealability of a compressor tend to be deteriorated, and if the kinematic viscosity at 40°C is more than 200 mm²/s, a composition range in which compatibility with the refrigerant is exhibited under low temperature conditions tends to be narrow, and lubrication failure in a refrigerant compressor and inhibition of heat exchange in an evaporator tend to easily occur.

In addition, the pour point of the polyalkylene glycol represented by the above formula (9) is preferably -10°C or lower and more preferably -20 to -50°C. If a polyalkylene glycol having a pour point of -10°C or higher is used, the refrigerating machine oil tends to be solidified at a low temperature in the refrigerant circulation system.

In addition, in the production step of the polyalkylene glycol of the above formula (9), alkylene oxides such as propylene oxide may cause a side reaction and thus an unsaturated group such as an aryl group may be formed in the molecule. If an unsaturated group is formed in the polyalkylene glycol molecule, the following phenomenon easily occurs: the thermal stability of the polyalkylene glycol itself is deteriorated, a polymerized produce is generated to generate sludge, or antioxidative property (oxidation prevention property) is deteriorated to generate peroxide. In particular, if peroxide is generated, it is decomposed to generate a compound having a carbonyl group, and the compound having a carbonyl group further generates sludge to easily cause blockage of a capillary.

Accordingly, as the polyalkylene glycol according to the present embodiment, one in which the degree of unsaturation due to an unsaturated group and the like is low is preferable, and specifically, the degree of unsaturation is preferably 0.04 meq/g or less, more preferably 0.03 meq/g or less, and most preferably 0.02 meq/g or less. In addition, the peroxide value is preferably 10.0 meq/kg or less, more preferably 5.0 meq/kg or less, and most preferably 1.0 meq/kg. Furthermore, the carbonyl value is preferably 100 ppm by weight or less, more preferably 50 ppm by weight or less, and most preferably 20 ppm by weight or less.

In the present embodiment, in order to obtain a polyalkylene glycol in which the degree of unsaturation, the peroxide value and the carbonyl value are low, it is preferable that the reaction temperature at which propylene oxide is reacted be 120°C or lower (more preferably 110°C or lower). In addition, if an alkali catalyst is used during the production, an inorganic adsorbent such as activated carbon, activated white earth, bentonite, dolomite, or aluminosilicate can be used for removing the catalyst, to thereby reduce the degree of unsaturation. In addition, it is possible to prevent the increase in peroxide value or carbonyl value also by avoiding the polyalkylene glycol being in contact with oxygen as much as possible during its production or use, or by adding an antioxidant.

While it is required for the polyalkylene glycol compound according to the present embodiment that the carbon/oxygen molar ratio is in a predetermined range, a polymer whose molar ratio is in the above range can be produced by selecting and regulating the types and the mixing ratio of the raw material monomers.

The content of the polyol ester, the polyvinyl ether or the polyalkylene glycol compound in the refrigerating machine oil is preferably 80% by mass or more and particularly preferably 90% by mass or more in total based on the total amount of the refrigerating machine oil in order that the refrigerating machine oil is excellent in characteristics demanded, such as lubricity, compatibility, thermal/chemical stability, and electrical insulation property. As the base oil, a mineral oil, a hydrocarbon-based oil such as an olefin polymer, a naphthalene compound and alkylbenzenes, and an oxygen-containing synthetic oil such as carbonates, ketones, polyphenyl ethers, silicones, polysiloxanes and perfluoroethers can be used in combination but the polyol ester, the polyvinyl ether and the polyalkylene glycol compound described later,. As the oxygen-containing synthetic oil, among them, carbonates or ketones are preferably used.

The kinematic viscosity of the refrigerating machine oil is not particularly limited, but the kinematic viscosity at 40°C can be preferably set to 3 to 1000 mm²/s, more preferably 4 to 500 mm²/s, and most preferably 5 to 400 mm²/s. In addition, the kinematic viscosity at 100°C can be preferably set to 1 to 100 mm²/s and more preferably 2 to 50 mm²/s.

The volume resistivity of the refrigerating machine oil is not particularly limited, but it can be preferably set to 1.0 × 10⁹ Ω·m or more, more preferably 1.0 × 10¹⁰ Ω·m or more, and most preferably 1.0 × 10¹¹ Ω·m or more. In particular, in the case where the refrigerating machine oil is used for a closed type refrigerating machine, a high electrical insulation property tends to be required. In the present invention, the volume resistivity means the value at 25°C measured according to JIS C 2101 "Electrical Insulation Oil Test Method".

The moisture content of the refrigerating machine oil is not particularly limited, but it can be preferably set to 200 ppm or less, more preferably 100 ppm or less, and most preferably 50 ppm or less based on the total amount of the refrigerating machine oil. In particular, in the case where the refrigerating machine oil is used for a closed type refrigerating machine, the moisture content is demanded to be low from the viewpoint of the influence on thermal/chemical stability and the electrical insulation property of the refrigerating machine oil.

The acid value of the refrigerating machine oil is not particularly limited, but it can be preferably set to 0.1 mgKOH/g or less and more preferably 0.05 mgKOH/g or less in order to prevent corrosion of a metal used for a refrigerating machine or a pipe, and to prevent decomposition of the ester contained in the refrigerating machine oil according to the present embodiment. In the present invention, the acid value means the acid value measured according to JIS K2501 "Petroleum Products And Lubricating Oils-Neutralization Value Test Method".

The ash content of the refrigerating machine oil is not particularly limited, but it can be preferably set to 100 ppm or less and more preferably 50 ppm or less in order to increase the thermal/chemical stability of the refrigerating machine oil according to the present embodiment and to suppress the occurrence of sludge or the like. In the present invention, the ash content means the value of the ash content measured according to JIS K2272 "Crude Oil/Petroleum Product Ash Content and Sulfated Ash Content Test Method".

The working fluid composition for a refrigerating machine according to the present embodiment can also be used in the form of being blended with various additives, if necessary. While the content of the additives is shown based on the total amount of a refrigerating machine oil composition, the content of these components in the fluid composition for a refrigerating machine is preferably 5% by mass or less and particularly preferably 2% by mass or less based on the total amount of a refrigerating machine oil composition.

In order to further improve the wear resistance and the load resistance of the working fluid composition for a refrigerating machine according to the present embodiment, it is possible to blend at least one phosphorus compound selected from the group consisting of phosphates, acidic phosphates, thiophosphates, amine salts of acidic phosphates, chlorinated phosphates, and phosphites. These phosphorus compounds are esters of phosphoric acid or phosphorous acid and an alkanol or a polyether type alcohol, or derivatives thereof.

In addition, the working fluid composition for a refrigerating machine according to the present embodiment can contain at least one epoxy compound selected from a phenylglycidylether type epoxy compound, an alkylglycidylether type epoxy compound, a glycidylester type epoxy compound, an allyloxysilane compound, an alkyloxysilane compound, an alicyclic epoxy compound, an epoxidated fatty acid monoester and an epoxidated vegetable oil in order to further improve the thermal/chemical stability thereof.

In addition, the working fluid composition for a refrigerating machine according to the present embodiment can if necessary contain conventionally known additives for a refrigerating machine oil in order to further enhance the performances thereof. Examples of such additives includes a phenol-based antioxidant such as di-tert-butyl-p-cresol and bisphenol A, an amine-based antioxidant such as phenyl-α-naphthylamine and N,N-di(2-naphthyl)-p-phenylenediamine, a wear inhibitor such as zinc dithiophosphate, an extreme pressure agent such as chlorinated paraffins and a sulfur compound, an oilness agent such as fatty acids, a defoaming agent such as silicones, a metal deactivator such as benzotriazole, a viscosity index improver, a pour point depressant, and a detergent dispersant. These additives may be used singly or in combination of two or more.

The working fluid composition for a refrigerating machine according to the present embodiment is preferably used for a room air-conditioner and a cold storage chamber having a closed type reciprocating or rotating compressor, or an open-type or closed type car air-conditioner. In addition, the working fluid composition for a refrigerating machine and the refrigerating machine oil according to the present embodiment are preferably used for a cooling apparatus or the like of a dehumidifier, a water heater, a refrigerator, a refrigeration and cooling warehouse, a vending machine, a showcase, a chemical plant, or the like. Furthermore, the working fluid composition for a refrigerating machine and the refrigerating machine oil according to the present embodiment are also preferably used for one having a centrifugal compressor.

### Examples

Hereinafter, the present invention is more specifically described based on Examples and Comparative Examples, but the present invention is not limited to the following Examples at all.

### [Refrigerating machine oil]

First, 0.1% by mass of di-ter.-butyl-p-cresol (DBPC) as an antioxidant was added to each of base oils 1 to 4 shown below to prepare each of refrigerating machine oils 1 to 4. Various properties of refrigerating machine oils 1 to 4 are shown in Table 1.

### [Base oil]

Base oil 1: ester of mixed fatty acid of 2-ethylhexanoic acid and 3,5,5-trimethylhexanoic acid (mixing ratio (molar ratio): 50/50) with pentaerythritol. Carbon/oxygen molar ratio: 4.8
Base oil 2: ester of mixed fatty acid of n-pentanoic acid, n-heptanoic acid and 3,5,5-trimethylhexanoic acid (mixing ratio (molar ratio): 40/40/20) with pentaerythritol. Carbon/oxygen molar ratio: 3.3
Base oil 3: copolymer of ethyl vinyl ether and isobutyl vinyl ether (ethyl vinyl ether/isobutyl vinyl ether = 7/1 (molar ratio)). Weight average molecular weight: 910; carbon/oxygen molar ratio: 4.3
Base oil 4: compound in which both ends of polypropylene glycol were methyl-etherified. Weight average molecular weight: 1100; carbon/oxygen molar ratio: 2.9
Base oil 5: compound being copolymer of polyoxyethylene glycol and polyoxypropylene glycol, wherein one end was methyl-etherified. Weight average molecular weight: 1700; carbon/oxygen molar ratio: 2.7

**[Table 1]**

| | Refrigerating machine oil 1 | Refrigerating machine oil 2 | Refrigerating machine oil 3 | Refrigerating machine oil 4 | Refrigerating machine oil 5 |
|---|---|---|---|---|---|
| Base oil | Base oil 1 | Base oil 2 | Base oil 3 | Base oil 4 | Base oil 5 |
| Carbon/oxygen molar ratio | 4.8 | 3.3 | 4.3 | 2.9 | 2.7 |
| Kinematic viscosity at 40°C [mm²/s] | 68.3 | 28.5 | 66.4 | 46.5 | 73.2 |
| Kinematic viscosity at 100°C [mm²/s] | 8.31 | 5.50 | 8.15 | 9.70 | 15.3 |
| Volume resistivity [Ω·m] | 5×10¹¹ | 6×10¹¹ | 9×10¹⁰ | 1×10⁹ | 1×10⁹ |
| Moisture content [ppm] | 45 | 56 | 87 | 95 | 97 |
| Acid value [mgKOH/g] | 0.01 | 0.01 | 0.01 | 0.01 | 0.01 |
| Hydroxyl value [mgKOH/g] | 2.1 | 1.8 | 1.5 | 4.8 | |
| Ash content [ppm by mass] | 0.1 | 0.1 | 0.1 | 0.1 | 0.1 |

### [Examples 1 to 11 and Comparative Examples 1 to 9]

In each of Examples 1 to 11 and Comparative Examples 1 to 9, with respect to each working fluid composition for a refrigerating machine in which each of refrigerating machine oils 1 to 4 was combined with each refrigerant shown in Tables 2 to 4, evaluation tests shown below were performed. As described later, the mass ratio of the refrigerant to the refrigerating machine oil in the working fluid composition for a refrigerating machine was changed with respect to each test.

As the refrigerant, HFC-161 itself, or a mixed refrigerant A, B or C in which HFC-161 was blended with HFC-134a, HFC-32, HFO-1234yf, and carbon dioxide (R744), which were neither highly flammable nor flammable and in which the GWP was relatively low, in consideration of the overall characteristics so that the GWP was 300 or less was used in each of Examples. Herein, the value defined with respect to the GWP of HFC-161 was not released, and thus the maximum value, 100, was used for calculation.

In each of Comparative Examples, any of HFC-32 and HFO-1234yf which were major candidates as new refrigerants in terms of GWP value, flammability, and thermodynamics characteristics was used.

### [Refrigerant]

HFC-161: monofluoroethane (GWP: about 100)
HFC-134a: 1,1,1,2-tetrafluoroethane (GWP: 1300)
HFC-32: difluoromethane (GWP: 675)
HFO-1234yf: 2,3,3,3-tetrafluoropropene (GWP: 4)
Mixed refrigerant A: HFC-161/HFC-134a = 85/15 (mass ratio, GWP: 280)
Mixed refrigerant B: HFC-161/HFC-32/R744 = 60/20/20 (mass ratio, GWP: 195)
Mixed refrigerant C: HFC-161/HFO-1234yf = 60/40 (mass ratio, GWP: 62)

Then, with respect to each of the working fluid compositions for a refrigerating machine in Examples 1 to 11 and Comparative Examples 1 to 9, evaluation tests shown below were performed. The results are shown in Tables 2 to 4.

### [Evaluation of compatibility]

According to JIS-K-2211, "Test Method of Compatibility of Refrigerating machine Oil with Refrigerant", 2 g of each refrigerating machine oil was blended with 18 g of each of the above refrigerants including the mixed refrigerants, and whether the refrigerant and the refrigerating machine oil were dissolved in each other at 0°C or not was observed. The results obtained are shown in Tables 2 to 4. In Tables, "Compatible" means that the refrigerant and the refrigerating machine oil were dissolved in each other and "Separated" means that the refrigerant and the refrigerating machine oil were separated to two layers.

### [Evaluation of thermal/chemical stability]

According to JIS-K-2211, 1 g of a refrigerating machine oil (initial ASTM color L: 0.5) in which the moisture content was adjusted to 100 ppm or less, 1 g of each of various refrigerants described above, and a catalyst (wire of each of iron, copper and aluminum) were enclosed into a glass tube, and then the resultant was placed in a protective tube made of iron, and heated to 175°C and kept therein for one week. After the test, the ASTM color of the refrigerating machine oil and the change in color of the catalyst color were evaluated. The ASTM color was evaluated according to ASTM D156. In addition, the change in color of the catalyst was evaluated by visually observing the appearance for rating as no change, no gloss, or blackened. In the case of no gloss or blackened, the mixed liquid of the refrigerating machine oil and the refrigerant, namely, a working fluid can be said to be deteriorated. The results obtained are shown in Tables 2 to 4.

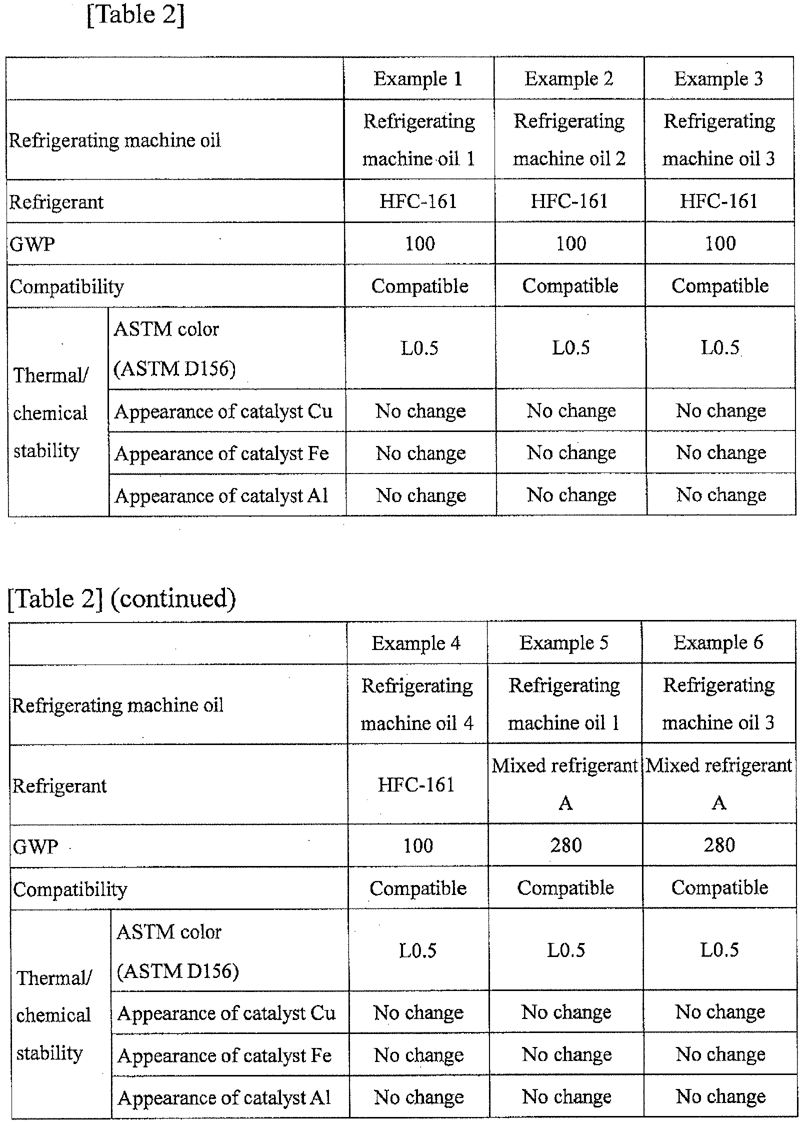

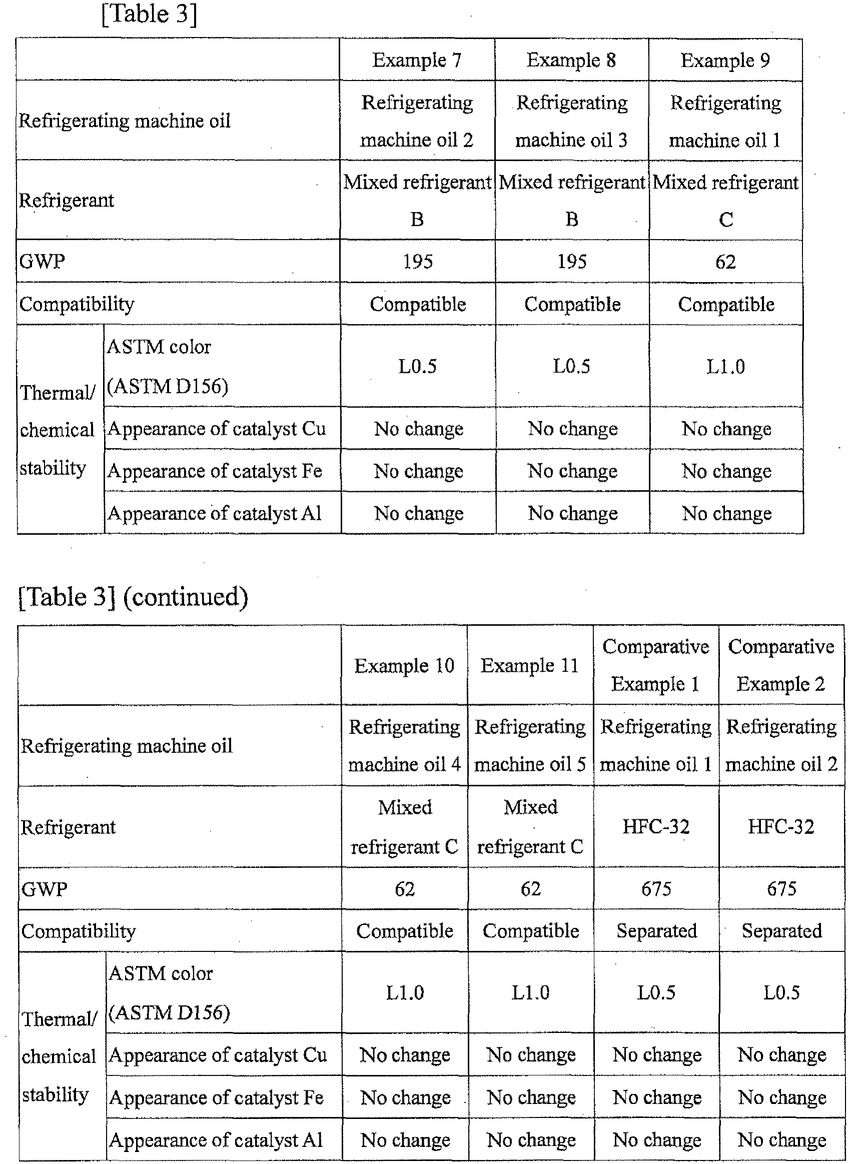

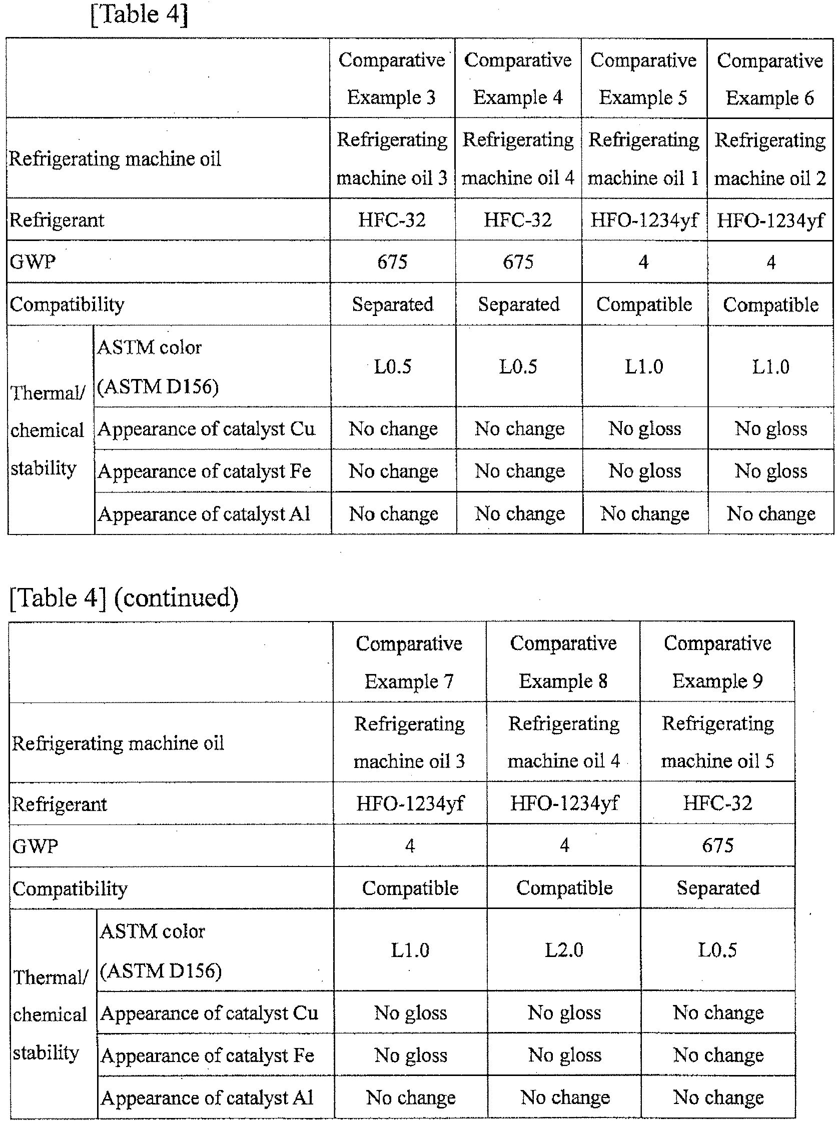

### Industrial Applicability

The present invention provides a working fluid composition for use in a refrigerating machine/air-conditioner using a refrigerant containing HFC-161, and the composition can be used as a working fluid in a in a high-cooling efficiency refrigeration system having a compressor, a condenser, a throttle device, an evaporator, and the like among which the refrigerant is circulated, in particular, in a refrigerating machine/air-conditioner having a compressor such as a rotary-type, swing-type, scrolling-type, or reciprocating-type compressor, and can be suitably used in the fields of a room air-conditioner, an all-in-one air conditioner, an industrial refrigerating machine, a coolerator, a car air-conditioner, and the like.

## Claims

1. A working fluid composition for a refrigerating machine, comprising:
a refrigerant comprising monofluoroethane; and
a refrigerating machine oil comprising at least one selected from a polyol ester, a polyvinyl ether and a polyalkylene glycol compound as a base oil, wherein a carbon/oxygen molar ratio of the base oil is 2.5 or more and 5.8 or less.

2. The working fluid composition for a refrigerating machine according to claim 1, wherein the refrigerant further comprises at least one selected from a compound represented by the following formula (A) and carbon dioxide.
CₚH_{q}Fᵣ (A)
[p represents an integer of 1 to 4, q represents an integer of 1 to 10, and r represents an integer of 0 to 5.]

3. The working fluid composition for a refrigerating machine according to claim 2, wherein the refrigerant comprises at least one selected from difluoromethane, 1,1-difluoroethane, 1,1,1-trifluoroethane, 1,1,1,2-tetrafluoroethane, pentafluoroethane, 1,3,3,3-tetrafluoropropene, 2,3,3,3-tetrafluoropropene, propane (R290) and isobutane (R600a) as the compound represented by the formula (A).

4. The working fluid composition for a refrigerating machine according to any one of claims 1 to 3, wherein a mass ratio of the refrigerant to the refrigerating machine oil is 90 : 10 to 30 : 70.

5. The working fluid composition for a refrigerating machine according to any one of claims 1 to 4, wherein a global warming potential of the refrigerant is 300 or less.

6. The working fluid composition for a refrigerating machine according to any one of claims 1 to 5, wherein the base oil comprises a polyol ester having a carbon/oxygen molar ratio of 2.5 or more and 5.8 or less, and the polyol ester is a polyol ester obtainable by synthesis from a fatty acid having 4 to 9 carbon atoms and a polyhydric alcohol having 4 to 12 carbon atoms.

7. The working fluid composition for a refrigerating machine according to any one of claims 1 to 6, wherein the base oil comprises a polyalkylene glycol compound having a carbon/oxygen molar ratio of 2.5 or more and 5.8 or less, and the polyalkylene glycol compound is a compound having a homopolymerization chain of propylene oxide or a copolymerization chain of propylene oxide and ethylene oxide, at least one of both ends of the chain being blocked by an ether bond.

8. The working fluid composition for a refrigerating machine according to any one of claims 1 to 7, wherein the base oil comprises a polyvinyl ether having a carbon/oxygen molar ratio of 2.5 or more and 5.8 or less, and the polyvinyl ether is a polyvinyl ether having a structural unit represented by the following formula (1): 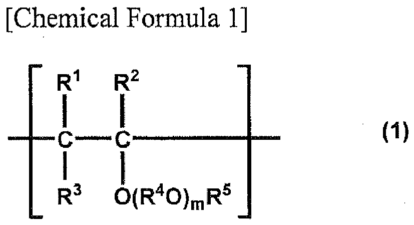 [R¹, R² and R³ may be the same or different and each represent a hydrogen atom or a hydrocarbon group having 1 to 8 carbon atoms, R⁴ represents a divalent hydrocarbon group having 1 to 10 carbon atoms or an ether bond oxygen-containing divalent hydrocarbon group having 2 to 20 carbon atoms, R⁵ represents a hydrocarbon group having 1 to 20 carbon atoms, m represents a number such that an average value of m in the polyvinyl ether is 0 to 10, R¹ to R⁵ may be the same or different in each occurrence of the structural units, and when m represents 2 or more in one structural unit, a plurality of R⁴O may be the same or different.]
